## Europäisches Patentamt

## European Patent Office

## Office européen des brevets

(19)

(11) Veröffentlichungsnummer: **0 193 652**
**A2**

(12) # EUROPÄISCHE PATENTANMELDUNG

(21) Anmeldenummer: **85116154.7**

(22) Anmeldetag: **18.12.85**

(51) Int. Cl.⁴: **G 01 N 31/00**

(30) Priorität: **04.03.85 DE 3507603**

(43) Veröffentlichungstag der Anmeldung: **10.09.86**
**Patentblatt 86/37**

(84) Benannte Vertragsstaaten: **AT BE CH DE FR GB IT LI LU NL SE**

(71) Anmelder: **Lochner, Gudrun, Felix-Mottl-Strasse 20, D-8580 Bayreuth (DE)**

(72) Erfinder: **Lochner, Horst, Felix-Mottl-Strasse 20, D-8580 Bayreuth (DE)**

(74) Vertreter: **Vossius & Partner, Siebertstrasse 4 P.O. Box 86 07 67, D-8000 München 86 (DE)**

(54) **Verfahren und Aktivatorgemisch zur Bestimmung von Stickstoff in organischen Verbindungen.**

(57) Gegenstand der Erfindung ist ein Verfahren zur quantitativen Bestimmung des Stickstoffgehalts einer Analysenprobe nach dem Kjeldahl-Verfahren, bei dem der Aufschluß in Gegenwart eines anorganischen Persalzes durchgeführt wird. Das Verfahren der Erfindung verläuft rasch und zuverlässig ohne Gesundheits- und Umweltgefährdung, da keine giftigen Schwermetalle verwendet werden.

u.Z.: U 218EP                          18. Dezember 1985

Grudun LOCHNER, Bayreuth, BRD
"Verfahren und Aktivatorgemisch zur Bestimmung von Stickstoff in organischen Verbindungen"

Die Erfindung betrifft ein Verfahren zur quantitativen Bestimmung des Stickstoffgehalts in einer Analysenprobe gemäß dem Oberbegriff des Anspruchs 1 sowie ein Mittel zur Durchführung des Verfahrens.

Bei dem von Kjeldahl entwickelten Verfahren zur Stickstoffbestimmung, das insbesondere für die Anwendung bei organischen Tier- und Pflanzensubstanzen, z.B. Eiweißstoffen, mit verhältnismäßig niedrigem N- und hohem C-Gehalt geeignet ist, wird die Analysenprobe durch Erhitzen mit konzentrierter Schwefelsäure aufgeschlossen. Der Kohlenstoff wird zu $CO_2$ oxidiert, während der organisch gebundene Stickstoff in $NH_4^{\oplus}$ übergeführt wird. Nach destillativer Abtrennung wird dann der Stickstoffgehalt durch Titration des Ammoniak bestimmt.

Durch Zugabe wasserentziehender Mittel, wie Kalium- oder Natriumsulfat wird der Aufschluß der Proben erleichtert. Der Umsatz läßt sich durch Zugabe geeigneter Katalysatoren wie $HgSO_4$, $CuSO_4$, Se, $SeO_2$ oder $TiO_2$ und durch Erhöhung des Kondensationspunktes des Reaktionsgemisches, beispielsweise durch Zusatz von Kaliumsulfat, verbessern; vgl. Römpps Chemielexikon, 8. Auflage (1983),Bd.3, S. 2117.

Die beste katalytische Wirkung auf die Umsetzung wird dem Quecksilber zugeschrieben. Nach F. Ehrenberger/S. Gorbach "Methoden der organischen Elementar- und Spurenanalyse" Verlag Chemie, (1973), S. 178, 180, 186 wird zum Aufschluß von Peptiden und schwer aufschließbaren Aminosäuren die Zugabe einer Katalysatormischung aus Kaliumsulfat, Quecksilbersulfat und Selenpulver unbedingt empfohlen.

Die Stickstoffbestimmung nach dem Kjeldahl-Verfahren hat in der Chemie und auch in der Lebensmitteltechnologie große Bedeutung. Beispielsweise müssen in Brauerein, Mälzerein und Lagerhäusern Malz, Gerste, Weizen, Würze und Bier wiederholt auf ihren Stickstoff- bzw. Eiweißgehalt kontrolliert werden. Im Handel sind deshalb Katalysatorgemische erhältlich, die meist Quecksilber und/oder Selen enthalten. Diese Elemente sind bekanntermaßen umweltschädliche Stoffe bzw. starke Gifte. Neben der direkten Gefahr für die damit arbeitenden Personen kommt es in der Regel nach beendeter Analyse zu einer Umweltverschmutzung und -schädigung, da die Proben häufig einfach in den Ausguß geschüttet werden. Durch die Vielzahl der durchgeführten Stickstoffanalysen entstehen somit verbreitete und hohe Abwasserbelastungen, hauptsächlich durch Quecksilber und Selen.

Zur Vermeidung der mit Quecksilber und/oder Selen verbundenen Umweltbelastungen wurden bereits Verfahren vorgeschlagen, die ohne diese Stoffe durchgeführt werden. Beispielsweise ist in der EP-B1-1513 ein Verfahren zur Bestimmung des Stickstoffgehalts in einer Probe nach dem Kjeldahl-Verfahren unter Verwendung eines Katalysators beschrieben, das dadurch gekennzeichnet ist, daß der Katalysator ein Antimonat oder ein gemischtes Oxid aus einem Metalloxid und $Sb_2O_5$ und/oder $Sb_2O_4$ ist. P.C. Williams beschreibt in J.Sci.Fd Agric. Bd. 24 (1973), S. 343 - 348 die Verwendung von $TiO_2$ als Katalysator für Kjeldahl-Bestimmungen des Gesamtstickstoffgehalts in Getreidekörnern in großem Maßstab. In Europäisches Arzneibuch, Bd. I (1974), S. 106 ist eine Kjeldahl-Bestimmung beschrieben, bei der die Probe mit einem Gemisch aus wasserfreiem Natriumsulfat oder Kaliumsulfat und Kupfer (II)-Sulfat, Schwefelsäure und konzentrierter Wasserstoffperoxidlösung (30%) versetzt und erhitzt wird. Die Verwendung von Wasserstoffperoxid ist auch aus Chemical Analysis, Vol. 28 (1970), S. 2 - 13, Wiley Interscience bekannt.

Auch diese Verfahren befriedigen jedoch nicht vollständig. Während die Verwendung von Titan- und Antimonverbindungen wiederum das Problem der Entsorgung mit sich bringt, ist bei der Verwendung von Wasserstoffperoxid eine wiederholte Zugabe erforderlich. Dies verlangt einen höheren Arbeitsaufwand und ist darüber hinaus nicht ungefährlich. Außerdem gelangt durch das Wasserstoffperoxid, das als wäßrige Lösung eingesetzt wird, eine erhebliche Menge Wasser in das Reaktionsgemisch, wodurch die für die Umsetzung notwendige wasserentziehende Wirkung der konzentrierten Schwefelsäure bzw. der zu diesem Zweck zugesetzten wasserfreien Salze aufgehoben wird. Schließlich verläuft die Umsetzung bei Verwendung von Wasserstoffperoxid für Routineuntersuchungen zu langsam.

Der Erfindung liegt die Aufgabe zugrunde, ein Verfahren zur quantitativen Bestimmung des Stickstoffgehalts in einer Analysenprobe nach dem Kjeldahl-Verfahren durch Zersetzung der Probe mit konzentrierter Schwefelsäure in Gegenwart eines Katalysators zu schaffen, das rasch und mit großer Genauigkeit durchgeführt werden kann, ohne daß die verwendeten Stoffe zu nicht vertretbaren Umwelt- oder Gesundheitsrisiken führen.

Diese Aufgabe wird durch den überraschenden Befund gelöst, daß eine rasche und genaue Bestimmung von Stickstoff in einer Analysenprobe nach dem Kjeldahl-Verfahren auch ohne Einsatz von umweltschädlichen Schwermetall-Katalysatoren möglich ist, wenn man die Zersetzung der Probe in Gegenwart eines anorganischen Persalzes durchführt.

Gegenstand der Erfindung ist somit ein Verfahren zur quantitativen Bestimmung des Stickstoffgehalts in einer Analysenprobe nach dem Kjeldahl-Verfahren durch Zersetzung der Probe mit konzentrierter Schwefelsäure in Gegenwart eines eine Peroxogruppe enthaltenden Oxidationsmittels, das dadurch gekennzeichnet ist, daß man die Zersetzung der Probe in Gegenwart eines anorganischen Peroxosalzes durchführt.

Das erfindungsgemäße Verfahren hat gegenüber der herkömmlichen Kjeldahl-Methode den wesentlichen Vorteil, daß keine stark giftigen Stoffe, wie Quecksilber- oder Selenverbindungen eingesetzt werden. Dadurch werden die hygienischen Bedingungen am Arbeitsplatz verbessert und Abwasserbelastung sowie Entsorgungsprobleme entfallen.

Das Verfahren der Erfindung verläuft mit einer ebenso raschen Aufschlußgeschwindigkeit wie bei Verwendung von Quecksilber- oder Selenverbindungen, die die besten bekannten Katalysatoren darstellen. Die Standardabweichung bei den Analysen ist günstiger als bei Verwendung der herkömmlichen Gemische; systematische Fehler, die bei der Stickstoffbestimmung häufig auftreten (vgl. EP-B1-1513), werden im Verfahren der Erfindung nicht beobachtet. Es treten auch keine Schwierigkeiten bei der anschließenden Destillation des Ammoniaks auf wie sie sich infolge der Komplexbildung des Stickstoffs mit bestimmten Schwermetallen, die im herkömmlichen Verfahren verwendet wurden, ergaben.

Als anorganische Peroxosalze eignen sich alle üblichen Peroxosalze, die keine stark alkalische Reaktion ergeben. Spezielle Beispiele für geeignete Peroxosalze sind die Perborate, wie Natrium-, Kalium- oder Kalziumperborat, und die Persulfate (Peroxodisulfate), wie Kaliumpersulfat und Natriumpersulfat.

Das anorganische Peroxosalz wird vorteilhafterweise in einer Menge von 1 bis 50, vorzugsweise von 5 bis 20 Gew.-teilen pro Gew.-Teil Analysenprobe eingesetzt.

Im Verfahren der Erfindung kann dem Aufschluß neben dem anorganischen Peroxosalz - insbesondere wenn ein besonders rascher Verlauf der Analyse gewünscht wird - eine katalytische Menge eines Wasserstoffperoxid (das vermutlich aus dem anorganischen Peroxosalz entsteht) zersetzenden Metallsalzes zugesetzt werden. Um einen wesentlichen Vorteil der Erfindung zu erhalten (die Umweltfreundlichkeit) werden dazu bevorzugt solche Metallsalze verwendet, die unter Umweltgesichtspunkten wenig bedenklich sind. Beispiele dafür sind Kupfer-, Mangan- und/oder Eisensalze.

Gegenstand der Erfindung ist ferner ein Mittel zur Durchführung des Verfahrens nach Anspruch 1, bestehend aus einem Katalysator und einem eine Peroxogruppe enthaltenden Oxidationsmittel, das dadurch gekennzeichnet ist, daß das Oxidationsmittel aus einem anorganischen Peroxosalz besteht und der Katalysator eine katalytische Menge eines Cu-, Mn- und/oder Fe-Salzes ist.

Bevorzugte Cu-, Mn- und/oder Fe-Salze sind die Sulfate. Es können jedoch auch andere stickstoffreie Salze, wie die Phosphate eingesetzt werden. Das Molverhältnis von Cu-, Mn- und/oder Fe-Salz zu Peroxosalz im Mittel der Erfindung beträgt 1:1 bis 1:1000, vorzugsweise 1:5 bis 1:100. Damit wird durch das Verfahren der Erfindung die Gesamtmenge an Metallverbindungen jedenfalls stark vermindert.

Sowohl das Peroxosalz als auch das Cu-, Mn- und/oder Fe-Salz werden wasserfrei verwendet, um die wasserentziehende Wirkung der Schwefelsäure nicht zu beeinträchtigen.

Die reaktionsfördernde Wirkung des Mittels der Erfindung beruht vermutlich auf der Spaltung des verwendeten Peroxosalzes in das zugrunde liegende "normale" Salz und Wasserstoffperoxid. Das erstere führt zu einer Siedepunkterhöhung, die für den Aufschluß der Analysenprobe erwünscht ist. Das Wasserstoffperoxid wird zersetzt und der frei werdende Sauerstoff führt zu einer schnellen Oxidation der Analysenprobe. Falls Metallionen, beispielsweise Cu-, Mn- und/oder Fe-Ionen vorhanden sind, wird die Zersetzung des Wasserstoffperoxids beschleunigt. Überschüssiges Wasserstoffperoxid wird durch Kochen entfernt.

Das Peroxosalz bzw. das Mittel der Erfindung kann in Pulver- oder Tablettenform oder in einer anderen üblichen Zubereitung hergerichtet werden. Es wird der Analysenprobe günstigerweise vor der Zugabe der konzentrierten Schwefelsäure zugesetzt. Die Durchführung der Analyse erfolgt dann in üblicher Weise; vgl. F. Ehrenberger / S. Gorbach a.a.O. S. 178 bis 187.

Die Beispiele erläutern die Erfindung.

B e i s p i e l   1

Zur Untersuchung wird Standardmalz (Weihenstephan) mit einem Stickstoffgehalt von 1,74 % verwendet. 10 g der Probe werden mit einer Labor-MIAG-Mühle gemahlen. Die Mehleinwaage beträgt 434,2 mg. Der Aufschluß erfolgt unter Erhitzen nach vorheriger Zugabe von 5 g Natriumpersulfat und 25 ml konzentrierte Schwefelsäure im Kjeldahlkolben. Nach etwa 30 min. ist die zu analysierende Probe vollständig aufgeschlossen. Es wird eine farblose und klare Lösung erhalten. Das entstandene Ammoniak wird nach Destillation in 2 % Borsäure aufgefangen. Die Titration erfolgt mit 0,1 n Salzsäure, von der 5,39 ml verbraucht werden. Daraus berechnet sich ein Stickstoffgehalt von 5,39 x 1,4008 x 100/434,2 = 1,74 %.

B e i s p i e l   2

Die Analysenprobe besteht aus 705,5 mg gemahlenes Gerstenmalz mit einem Wassergehalt von 4,60 %. Zum Aufschluß im Kjeldahlkolben werden 20 ml konzentrierte Schwefelsäure und 5 g Aktivatorgemisch, bestehend aus 90 % Natriumpersulfat, 7,5 % Kupfersulfat und 2,5 % Mangansulfat verwendet. Die Probe wird unter Absaugen der Schwefelsäuredämpfe 25 min. erhitzt. Nach dem Abkühlen auf Zimmertemperatur wird die grüne, klare Lösung mit 150 ml Wasser und nach erneuter Abkühlung mit 125 ml 32 % Natronlauge versetzt. Das Ammoniak wird nach Anschluß an eine Destilliereinheit in eine Vorlage destilliert. Diese enthält 20 ml 0,1 n Schwefelsäure. Der Schwefelsäureüberschuß wird mit 0,1 n Natronlauge zurücktitriert. Der Verbrauch an 0,1 n Schwefelsäure beträgt 7,8 ml. Daraus berechnet sich ein Stickstoffgehalt von 7,8 x 1,4008 x 100/705,5 x 100/(100-4,60) = 1,62 %, bezogen auf Trockensubstanz in der Gerstenmalzprobe.

## B e i s p i e l   3

Als Analysenprobe wird Acetanilid mit einem theoretischen Stickstoffgehalt von 10,36 % verwendet. Die Einwaage beträgt 188,1 mg. Die Analyse wird im Kjeldahlkolben mit 20 ml konzentrierte Schwefelsäure und 5 g Aktivatorgemisch, bestehend aus 90 % Natriumpersulfat und 10 % Kupfersulfat durchgeführt. Die Probe wird unter Absaugen der Schwefelsäuredämpfe 25 min. erhitzt. Die Destillation des Ammoniak erfolgt gemäß Beispiel 2.
Verbrauch an 0,1 n Schwefelsäure: 13,91 ml. Daraus errechnet sich ein Stickstoffgehalt von 13,91 x 1,4008 x 100/188,1 = 10,36 %.

## B e i s p i e l   4

20 ml kalte Exportbierwürze (12,65 % Extrakt) werden im Kjeldahlkolben vorsichtig zur Sirupdicke eingeengt. Dann werden 20 ml konzentrierte Schwefelsäure und 5 g Aktivatorgemisch, bestehend aus 45 % Natriumperborat, 45 % Natriumpersulfat und 10 % Kupfersulfat zugesetzt. Die Durchführung der Analyse erfolgt wie in Beispiel 2.
Verbrauch an 0,1 n Schwefelsäure: 17,04 ml. Daraus errechnet sich ein Stickstoffgehalt von 17,04 x 1,4008 x 100/20 = 119,3 mg in 100 ml Bierwürze mit 12,65 % Extrakt.

<u>P a t e n t a n s p r ü c h e</u>

1. Verfahren zur quantitativen Bestimmung des Stickstoffgehalts in einer Analysenprobe nach dem Kjeldahl-Verfahren durch Zersetzung der Probe mit konzentrierter Schwefelsäure in Gegenwart eines eine Peroxogruppe enthaltenden Oxidationsmittels, dadurch gekennzeichnet, daß man die Zersetzung der Probe in Gegenwart eines anorganischen Peroxosalzes durchführt.

2. Verfahren nach Anspruch 1, dadurch gekennzeichnet, daß man als anorganisches Peroxosalz ein Alkalimetall-Peroxodisulfat und/oder -Perborat verwendet.

3. Verfahren nach Anspruch 1 und 2, dadurch gekennzeichnet, daß man das anorganische Peroxosalz in einer Menge von 1 bis 50 Gew.-Teilen pro Gew.-Teil der Analysenprobe einsetzt.

4. Verfahren nach Anspruch 1 bis 3, dadurch gekennzeichnet, daß man zusätzlich eine katalytische Menge eines Wasserstoffperoxid zersetzenden Metallsalzes einsetzt.

5. Verfahren nach Anspruch 4, dadurch gekennzeichnet, daß man als Wasserstoffperoxid zersetzendes Metallsalz ein Cu-, Mn- und/oder Fe-Salz verwendet.

6. Verfahren nach Anspruch 4 oder 5, dadurch gekennzeichnet, daß man das Metallsalz in einem Molverhältnis zum Peroxosalz von 1:1 bis 1:1000 verwendet.

0193652

7.  Mittel zur Durchführung des Verfahrens nach Anspruch 1, bestehend aus einem Katalysator und einem eine Peroxogruppe enthaltenden Oxidationsmittel, dadurch gekennzeichnet, daß das Oxidationsmittel aus einem anorganischen Peroxosalz besteht und der Katalysator eine katalytische Menge eines Cu-, Mn- und/oder Fe-Salzes ist.

8.  Mittel nach Anspruch 7, dadurch gekennzeichnet, daß das Peroxosalz ein Alkalimetall-Peroxodisulfat und/oder -Perborat ist und zum Cu-, Mn- und/oder Fe-Salz im Molverhältnis von 1:1 bis 1:1000 steht.